# EUROPEAN PATENT SPECIFICATION

(11) **EP 4 437 741 B1**
(45) Date of publication and mention of the grant of the patent: **10.12.2025**
(21) Application number: 22826198.8
(22) Date of filing: 17.11.2022
(51) Int. Cl.: H04W 4/029, H04W 4/42, H04W 4/80

(54) **TRACKING METHOD AND APPARATUS FOR A TRANSPORTATION NETWORK**
VERFOLGUNGSVERFAHREN UND -VORRICHTUNG FÜR EIN TRANSPORTNETZWERK
PROCÉDÉ ET APPAREIL DE SUIVI POUR UN RÉSEAU DE TRANSPORT

(30) Priority: 26.11.2021 IT 202100029960
(43) Date of publication of application: 02.10.2024
(73) Proprietor: Hitachi Rail STS S.p.A., 80147 Napoli (IT)
(72) Inventor: IMPAGLIAZZO, Leonardo, 80147 Napoli (NA) (IT); STRIGARO, Carmine, 80147 Napoli (NA) (IT); CASCELLI, Bibiana, 80147 Napoli (NA) (IT); NARDONE, Davide, 80147 Napoli (NA) (IT)
(74) Representative: Metroconsult Srl
(86) International application number: PCT/IB2022/061084
(87) International publication number: WO 2023/094950

(56) References cited:
- WO-A1-2017/166764
- KR-A- 20210 116 072
- US-B1- 10 332 162

## Description

The present invention relates to a method and an apparatus for tracking a second user equipment in a transportation network, particularly in an intermodal public transportation network.

As is known, there is an increasing need for measuring and controlling the flows of people moving in a public transportation network in order to reduce the assembling of crowds in specific spots within the transportation network, such as, for example, in proximity to ticket validators or ticket vending machines, where people tend to assemble for validating or buying travel documents. This results in decreased efficiency of the transportation network, producing also increased carbon dioxide emissions because of the lower average speed - and reduced efficiency - of the means of transportation. In means of transportation like trams and buses, in fact, people tend to create queues (thus assembling) as they get on the means of transportation, in that many passengers must validate their tickets using a validator prior to reaching their seats, thus causing a reduction in the average speed and efficiency of the means of transportation.

Prior art patent publication KR 2021 0116072 A discloses a search terminal to be implemented in a smartphone or to be mounted in a public transportation means.

The solution described in European patent application publication No. EP 3 843 028 A1 solves these problems by means of an electronic ticket vending/validating system that permits speeding up the ticket emission/validation process by using a user equipment (e.g. a smartphone, a smartwatch, or the like) configured for detecting the presence of radio transmitters (also known as "beacons") positioned at stops and on public means of transportation for determining the position of the user of said equipment on the basis of the detected beacons, thus making it possible to determine the route being followed within the transportation network.

However, this solution has some drawbacks; in fact, the beacons are positioned in well-known spots within the network, and are therefore exposed to a high risk of acts of vandalism. Moreover, this solution turns out to be poorly fault-tolerant, because in the event of a malfunction of one or more beacons positioned at a particular stop of the transportation network, many passengers in transit from that very stop will not be detected, thus making the tracking of the users in the transportation network incomplete.

The present invention aims at solving these and other problems by providing a method for tracking a user equipment in a transportation network.

Furthermore, the present invention aims at solving these and other problems by providing also a user equipment for tracking a second user equipment in a transportation network.

The basic idea of the present invention is to configure a user equipment (e.g. a smartphone, a smartwatch, a tablet, or the like) or an in-vehicle apparatus situated in a means of transportation in such a way as to execute the following steps:
- receiving a first identification signal emitted by said second user equipment when it is aboard said means of transportation, wherein said first identification signal comprises a first identification datum (ID1) that identifies said second user equipment;
- determining, via the positioning means, a position datum that defines the position in which said first identification signal has been received;
- transmitting a second identification signal to an electronic computer, wherein said second identification signal comprises at least said first identification datum and said position datum.

This allows an electronic computer to know the position of the second user equipment, and hence to track the route being followed by the second user equipment within the transportation network, even when said second user equipment is unable to communicate with said electronic computer, e.g. because the data connection has been disabled or has not been configured, or because the data network is not available on a specific band or not accessible due to an excessively large number of user equipments within a given area, etc.

Further advantageous features of the present invention will be set out in the appended claims.

These features as well as further advantages of the present invention will become more apparent in the light of the following description of a preferred embodiment thereof as shown in the annexed drawings, which are provided herein merely by way of non-limiting example, wherein:
- Fig. 1 shows a block diagram of a user equipment according to the invention;
- Fig. 2 shows a tracking system comprising a plurality of user equipments like the one of Fig. 1;
- Fig. 3 shows a flow chart representing a method according to the invention;
- Fig. 4 shows a preferred embodiment of the tracking system of Fig. 2.

In this description, any reference to "an embodiment" will indicate that a particular configuration, structure or feature is comprised in at least one embodiment of the invention. Therefore, expressions such as "in an embodiment" and the like, which may be found in different parts of this description, will not necessarily refer to the same embodiment. Moreover, any particular configuration, structure or feature may be combined as deemed appropriate in one or more embodiments. The references below are therefore used only for simplicity's sake, and shall not limit the protection scope or extension of the various embodiments.

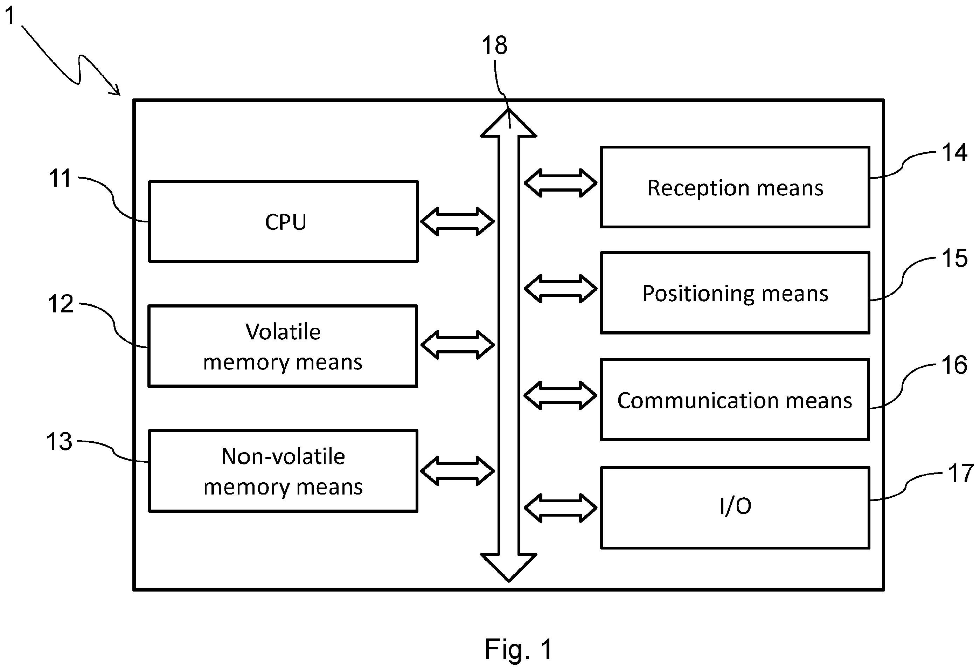

With reference to Fig. 1, the following will describe an embodiment of a user equipment 1 (e.g. a smartphone, a smartwatch, a tablet, or the like) according to the invention, wherein said user equipment 1 can track a second user equipment in a transportation network, preferably a public urban or suburban transportation network.

The user equipment 1 according to the invention comprises the following components:
- processing and/or control means 11, e.g. one or more CPUs, which control the operation of the user equipment 1, preferably in a programmable manner, through the execution of suitable instructions;
- volatile memory means 12, e.g. a random access memory RAM, in signal communication with the processing and/or control means 11, wherein said volatile memory means 12 store at least instructions that can be read by the processing and/or control means 11 when the user equipment 1 is in an operating condition;
- non-volatile memory means 13, preferably a Flash memory or the like, in signal communication with the processing and/or control means 11 and with the volatile memory means 12, wherein said memory means 13 store a set of instructions implementing at least a method for tracking a second user equipment in a transportation network according to the invention;
- reception means 14 configured for receiving a first identification signal emitted by said second user equipment when it is aboard a means of transportation (e.g. a bus, a tram, a train, or the like), wherein said first identification signal comprises a first identification datum (e.g. an ID specially generated by using a pseudo-random numerical sequence generator, a MAC address, or the like) which identifies said second user equipment (1,1a); such reception means 14 will be described in further detail hereinafter;
- positioning means 15 (e.g. a GNSS receiver or another positioning system, such as, for example, a WiFi^{™} or Bluetooth^{™} indoor positioning system, base stations of a cellular network, or the like) that can be configured for determining position data (e.g. a pair of fixed-precision decimal numbers), which define a position in which the reception means 14 have received said first identification signal;
- communication means 16, preferably a network interface operating in accordance with a standard of the IEEE 803.2 family (also known as Ethernet) or the 802.11 family (also known as WiFi^{™}) or the 802.16 family (also known as WiMax^{™}) or an interface to a data network of the GSM^{™}/GPRS^{™}/UMTS^{™}/LTE^{™} or TETRA^{™} type, or the like, which allow the user equipment 1 to communicate with other devices through a data network, the latter being described in further detail hereinafter;
- input/output (I/O) means 17, which can be used, for example, for connecting to said user equipment 1 a number of peripherals (e.g. a MEMS accelerometer/gyroscope/compass, one or more interfaces allowing access to other storage means, so as to permit, preferably, copying information from the latter to the non-volatile memory means 13, or the like), or a programming terminal configured for writing instructions (which the processing and control means 11 will have to execute) into the memory means 12,13; such input/output means 17 may comprise, for example, a USB, FireWire, RS232, IEEE 1284, etc. adapter;
- a communication bus 18 allowing information to be exchanged among the processing and control means 11, the volatile memory means 12, the non-volatile memory means 13, the positioning means 15, the communication means 16 and the input/output (I/O) means 17.

As an alternative to the communication bus 18, the processing and control means 11, the volatile memory means 12, the non-volatile memory means 13, the reception means 14, the positioning means 15, the communication means 16, and the input/output (I/O) means 17 may be connected by means of a star architecture.

It must be highlighted that the first and second user equipments are preferably similar to each other.

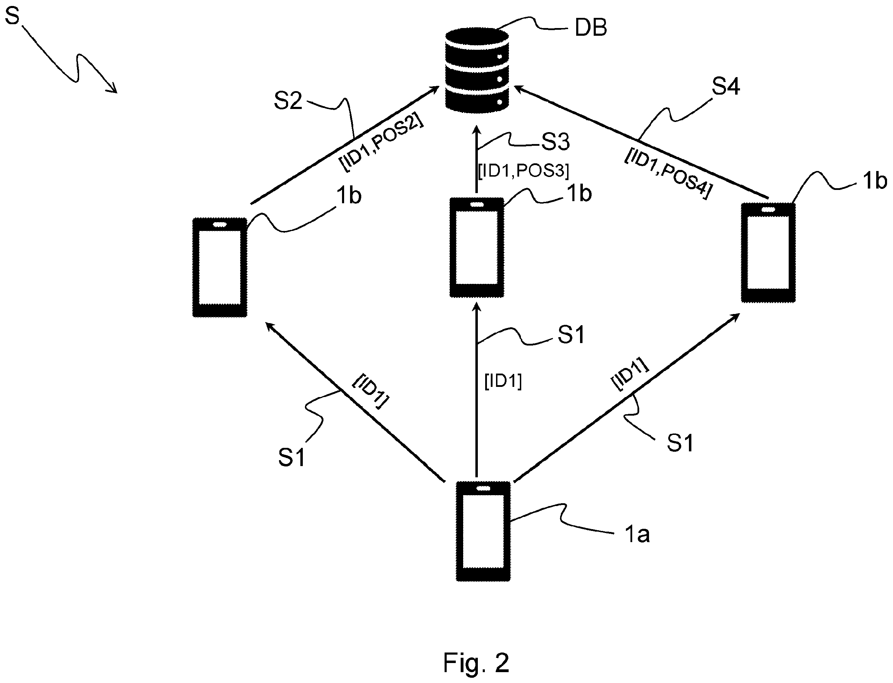

Also with reference to Figure 2, a tracking system S comprises a plurality of user equipments 1 like the one described above (designated as "1a" and "1b") and an electronic computer DB, which will be described below.

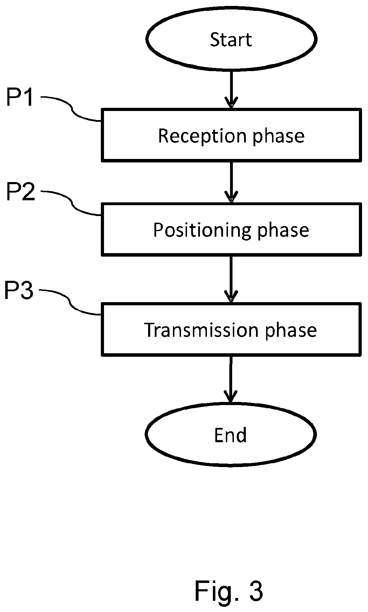

Also with reference to Figure 3, the following will describe the operation of the equipment 1 when it is in an operating condition.

When the user equipment 1 (also identified as "1b") is in an operating condition, the processing and/or control means 11 of said user equipment 1b execute a set of instructions implementing the method for tracking a second user equipment 1a in a transportation network; such method comprises the following phases:
- a reception phase (P1), wherein the first identification signal S1 emitted by the second user equipment 1a when it is aboard a means of transportation is received by the reception means 14, wherein said first identification signal comprises a first identification datum ID1 that identifies said second user equipment 1a;
- a positioning phase P2, wherein a position datum POS2,POS3,POS4 is determined by the positioning means 15, and said position datum defines the position in which the reception means 14 of said user equipment 1b have received said first identification signal ID1;
- a transmission phase P3, wherein a second identification signal S2,S3,S4 is transmitted, by the communication means 16, to an electronic computer DB, wherein said second identification signal comprises at least said first identification datum ID1 and said position datum POS2,POS3,POS4, so that said electronic computer DB can, as will be further described hereinafter, track the route being followed by said second user equipment 1a in said transportation network on the basis of at least said first identification datum ID1 and said position datum POS2,POS3,POS4.

This allows an electronic computer to know the position of the second user equipment, and hence to track the route being followed by the second user equipment 1a within the transportation network, even when said second user equipment 1a is unable to communicate with said electronic computer DB.

The reception means 14 preferably comprise a wireless data interface such as, for example, a Bluetooth^{™} or WiFi^{™} data interface; in addition, it must be pointed out that such wireless data interface may also be comprised in the positioning means 15.

The electronic computer DB preferably comprises two or more servers connected to each other to form a cluster; said electronic computer DB is preferably configured for executing a set of instructions implementing a DBMS (Data Base Management System), which permits organizing the data received from the user equipments 1b so as to ensure that such data can be accessed efficiently. Moreover, said electronic computer DB is also configured for executing a set of instructions implementing a tracking algorithm adapted to determine, on the basis of one or more position data determined and transmitted by one or more of said user equipments 1b, a route datum that defines a route that the second equipment 1a has followed within the transportation network. This set of instructions preferably implements a neural network trained by inputting to said neural network at least one sequence of position data and by forcing it to output at least one route datum compatible with the input sequence of position data, wherein the term "compatible" indicates that the data sequence inputted to the neural network could be generated by a user equipment which has (actually) followed the route defined by the route datum forcedly outputted by said neural network. This increases noise immunity (which noise may enter the system during the positioning phase P2) of the tracking process executed by the electronic computer DB.

In this way, it is possible to track the route being followed by the second user equipment 1a in the transportation network with a higher level of accuracy.

As can be understood from Figure 3, the method according to the invention can be executed simultaneously by a plurality of user equipments 1b, thus advantageously making it possible to obtain position data concerning the second user equipment 1a from multiple user equipments 1b. In this manner, the electronic computer DB can track the route of the second user equipment 1a within the transportation network with greater accuracy, thereby reducing the risk that said second equipment 1a is not detected or is wrongly detected, e.g. when the user of said equipment is waiting at a stop and detected aboard a bus or a tram.

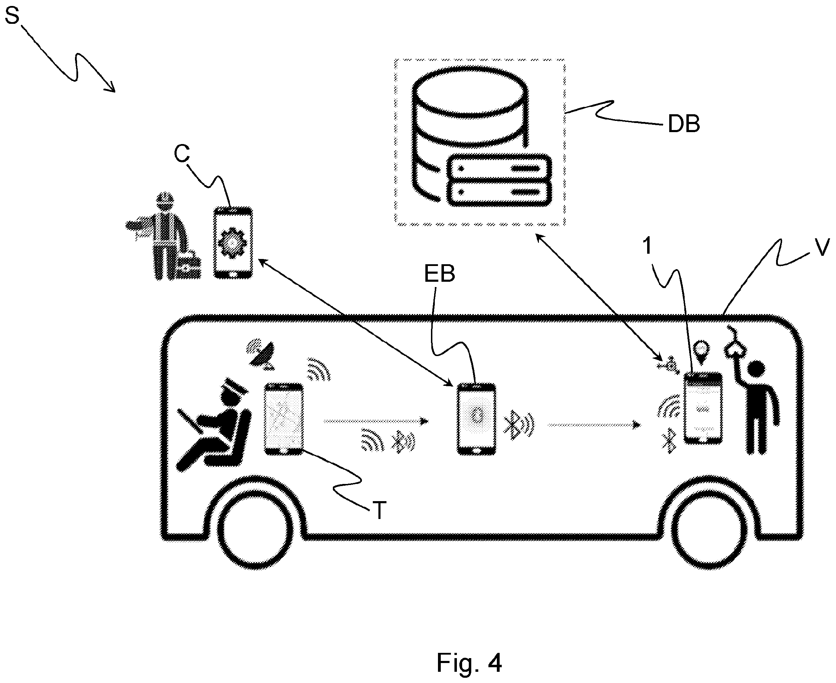

Also with reference to Fig. 4, the following will describe the preferred embodiment of the tracking system S.

In more detail, the system S preferably comprises also a transmitter apparatus EB positioned on a (public) transportation vehicle V and comprising a radio transmitter, preferably of the Bluetooth^{™} or WiFi^{™} type, which transmits an in-vehicle signal comprising trip data concerning a service provided by the transportation vehicle V, such as, for example, data representing a position (e.g. latitude and longitude) in which said transportation vehicle V is located and/or identifying, preferably in alphanumerical format, the line on which said vehicle is providing service and/or one or more stops where the vehicle V has already stopped and/or will have to stop; said transmitter apparatus EB may be a smartphone, a tablet, an industrial PC (equipped with a Bluetooth^{™} or WiFi^{™} interface), or another type of device suitable for being positioned on a transportation vehicle V.

The positioning signal can be received by the positioning means 15 of the user equipment 1. For this purpose, the positioning means 15 preferably comprise a radio receiver/transceiver, preferably of the Bluetooth^{™} type, and the processing and/or control means 11 are preferably configured for determining the position datum (during the positioning phase P2) by executing the following steps:
- receiving, via the radio receiver, the in-vehicle signal emitted by the transmitter apparatus EB;
- determining the position datum on the basis of the trip data comprised in said in-vehicle signal, e.g. by reading the latitude and longitude data (if available) or by retrieving from the Internet the position of a given stop or the route (or part thereof) of the line whereon the transportation vehicle V is providing service.

This allows the user equipment 1 to determine its own position even when it is unable to do so autonomously, e.g. due to the impossibility of seeing the sky or receiving the signal of at least one base station of a cellular network, or because said user equipment 1 wants to reduce its power consumption, or the like. This situation occurs very often when travelling along underground tunnels lacking proper communication equipment, where the GNSS receiver and/or the communication means 16 cannot be used for establishing the position of the user equipment. The electronic computer DB can thus come to know the position of a user equipment 1a which is unable to communicate with the electronic computer DB, and hence can track the route being followed by said user equipment 1a in the transportation network even when said user equipment 1a cannot communicate with said electronic computer DB and the other user equipments 1b are unable to autonomously determine their own position.

Furthermore, the radio receiver comprised in the positioning means 15 may be of the Bluetooth^{™} Low Energy (BLE) type; such a radio receiver has the advantage that it requires no pairing procedure, and hence no user action, thus facilitating the operation of the system S.

In combination with or as an alternative to the above, the radio transceiver comprised in the positioning means 15 may be of the WiFi^{™} and/or Bluetooth^{™} Low Energy type, i.e. it can establish a connection with the transmitter apparatus EB. In other words, the processing and/or control means 11 are preferably also configured for establishing a connection with the transmitter apparatus EB prior to receiving the in-vehicle signal emitted by said transmitter apparatus EB, and for keeping said connection alive (e.g. by repeatedly sending messages via the Bluetooth^{™} Low Energy interface) after having determined the position datum. This allows the transmitter apparatus EB to constantly know the number of user equipments 1a,1b actually connected to it, so that it can compare such number with the number of people actually aboard; as a matter of fact, the number of people can preferably be measured using well-known solutions (e.g. surveillance cameras connected to a computer running an algorithm capable of counting the number of people getting on and off the vehicle V), so that it is possible to know whether all passengers have their user equipments 1a,1b active and configured to permit tracking within the transportation network, and, if there are any untracked passengers, to invite such passengers to activate the specific application on their user equipment 1a,1b (i.e. to properly configure their user equipment 1a,1b), e.g. by playing an audio and/or video message inviting the passengers to activate the application, and signalling this situation to a driver and/or a ticket inspector, or the like.

In other words, the transmitter apparatus EB can be configured for executing the following steps:
- determining a number of passengers aboard the vehicle, e.g. by acquiring such datum (e.g. via the ModBus^{™} protocol) from a passenger counting system aboard the vehicle V;
- determining a number of user equipments 1a,1b connected to said transmitter apparatus EB;
- determining, on the basis of the number of passengers and the number of user equipments 1a,1b connected to said transmitter apparatus EB, whether an invitation signal (e.g. an audio/video message and/or a notification for a ticket inspector and/or a driver) should be generated in order to invite the passengers to correctly configure their own user equipments 1a,1b, so as to reduce the presence of untracked passengers.

This reduces the probability that untracked passengers are present in the transportation network. In this way, the electronic computer DB can come to know the position of a larger number of user equipments 1a,1b, being thus able to track the route being followed by said user equipments 1a,1b in the transportation network even when said user equipments 1a are unable to communicate with said electronic computer DB.

In combination with or as an alternative to the above, the positioning means 15 may comprise a wireless network access interface, i.e. an IEEE 802.11 (WiFi^{™}) communication interface, wherein the memory means 12,13 preferably contain at least coverage data associating with at least one wireless network a position or an area where it is possible to receive the signal of said wireless data network, and wherein the processing and/or control means 11 are preferably configured for determining the position datum (during the positioning phase) by executing the following steps:
- determining, by means of the wireless network access interface, a set of identifiers, each one of which identifies one wireless data network, e.g. the SSID, the MAC address of an access point, or the like.
- determining the position datum on the basis of said set of identifiers and the coverage data.

This allows the user equipment 1b to determine its own position at a low energetic cost, thus reducing the risk of the presence of untracked passengers in the transportation network. In this manner, the electronic computer DB can know the position of a larger number of user equipments 1a,1b, and hence can track the route being followed by said user equipments 1a,1b in the transportation network even when said user equipments 1a are unable to communicate with said electronic computer DB.

In combination with or as an alternative to the above, the positioning means 15 preferably comprise also a receiver of satellite positioning signals, i.e. a GNSS receiver, and the processing and/or control means 11 are preferably configured for determining the positioning data by executing the following steps:
- activating the GNSS receiver;
- determining, via the GNSS receiver, at least one signal-to-noise ratio of at least one positioning signal, preferably received from a positioning satellite and preferably usable for calculating the position;
- determining, via the GNSS receiver, the positioning datum if said at least one signal-to-noise ratio is higher than a threshold, e.g. a threshold that ensures a positioning precision of less than 7 metres.

This solution is particularly interesting in the initial phase of deploying the tracking system C or in case of a failure of the transmitter apparatus EB, in that it ensures that the position data associated with a user equipment 1a (which is unable to communicate with the electronic computer DB) are reliable, i.e. that they have been determined by means of a GNSS receiver in satisfactory reception conditions, advantageously discarding any user equipments 1b in unfavourable reception conditions, e.g. inside a bag, near metal objects, far from windows, or the like. In this way, the electronic computer DB can know the position of a user equipment 1a, and hence track the route being followed by said user equipment 1a in the transportation network even when said user equipment 1a is unable to communicate with said electronic computer DB.

In combination with or as an alternative to the above, the user equipment 1b may comprise orientation means, e.g. a MEMS accelerometer and/or gyroscope and/or compass, configured for generating an orientation signal representing at least one orientation of the user equipment 1b and/or a movement to which said user equipment 1b is being subjected, and the processing and/or control means 11 are preferably configured for executing the following steps:
- acquiring, via the input means 17, the orientation signal generated by the orientation means;
- determining, on the basis of the orientation signal, a motion datum that defines whether said user equipment 1b is in a means of transportation, e.g. by executing a set of instructions implementing a neural network trained to recognize an orientation signal of a user equipment situated in a moving (public) means of transportation;
- determining the position datum (only) if said motion datum indicates that the user equipment 1b is in a means of transportation.

This makes it possible to prevent any user equipments 1a,1b that are not aboard a public means of transportation, but in the vicinity thereof (e.g. waiting at a stop, or on a pavement along a road whereon public means of transportation are travelling) from executing the method according to the invention.

In this way, the electronic computer DB can come to know the position of a user equipment 1a, and hence can track the route being followed by said user equipment 1a (which is unable to communicate with the electronic computer DB) in the transportation network only when said user equipment 1b is aboard a means of transportation, thus improving the quality of the acquired data.

In addition to the above, the system S preferably comprises also a service apparatus T (e.g. a smartphone, a smartwatch, or the like), which is preferably assigned to the driver of the vehicle V, and which executes an application that controls the operation of the transmission apparatus EB so as to ensure that the messages issued by said transmission apparatus EB will always be up-to-date and coherent with the route that the vehicle V is about to travel or has already travelled.

In other words, the service apparatus T is preferably configured for executing the following steps:
- establishing a connection (via Bluetooth^{™} or WiFi^{™}) with the transmission apparatus EB and, preferably, logging in to it;
- generating update data on the basis of service data specifying a status of a service that the vehicle V will have to provide or is providing, such as, for example, a line identifier, a direction of travel along said line, a current position, stops already made, stops still to be made, or the like;
- transmitting, via said connection, an update message to the transmission apparatus EB, wherein said update message contains at least said update data.

In addition, the transmission apparatus EB is preferably configured for receiving said update message and for generating the trip data on the basis of said update message.

This makes it possible to constantly update the messages transmitted by the transmission apparatus EB, thus preventing the transmission apparatus EB from transmitting wrong data and the electronic computer DB from receiving wrong information; it happens quite often, in fact, that when driver changes occur, and particularly at line termini, electronic systems like the transmission apparatus EB are not updated by the driver in the vehicle V or, remotely, by the transportation network supervisor. Furthermore, this solution prevents detecting people who are aboard the vehicle V before it leaves, e.g. when the vehicle V is still waiting at the terminus prior to starting service.

In this way, the electronic computer DB can know the position of a user equipment 1a, and hence can track the route being followed by said user equipment 1a in the transportation network only when said user equipment 1b is aboard a means of transportation during its actual service, thus improving the quality of the acquired data.

Lastly, the system S preferably comprises also a maintenance apparatus C (e.g. a smartphone, a smartwatch, or the like) that allows a service technician to supervise, configure and verify the operation of the apparatus EB, e.g. when the vehicle V enters or exits a depot, so as to minimize the risk that the transmission apparatus EB is out of service and that the electronic computer DB will receive low-quality data or no data at all about the access to the vehicle V by users of the transportation network.

Of course, the example described so far may be subject to many variations.

Some of the possible variants of the invention have been described above, but it will be clear to those skilled in the art that other embodiments may also be implemented in practice, wherein several elements may be replaced with other technically equivalent elements. The present invention is not, therefore, limited to the above-described illustrative examples, but may be subject to various modifications, improvements, or replacements of equivalent parts and elements without however departing from the basic inventive idea, as specified in the following claims.

## Claims

1. User equipment (1,1b) for tracking a second user equipment (1,1a) in a transportation network, comprising
- reception means (14) for receiving signals emitted by said second user equipment (1,1a),
- positioning means (15) for determining the position of said user equipment (1,1b),
- communication means (16) for transmitting signals to an electronic computer (DB), and
- processing means (11) configured for
• receiving, via the reception means (14), a first identification signal (S1) emitted by said second user equipment (1,1a) when it is aboard a means of transportation (V), wherein said first identification signal comprises a first identification datum (ID1) that identifies said second user equipment (1,1a),
• determining, via the positioning means (15), a position datum (POS2,POS3,POS4) that defines the position in which said first identification signal (S1) has been received, and
• transmitting, via the communication means (16), a second identification signal (S2,S3,S4) to said electronic computer (DB), wherein said second identification signal (S2,S3,S4) comprises at least said first identification datum (ID1) and said position datum (POS2,POS3,POS4), so that said electronic computer (DB) can track the route being followed by said second user equipment (1,1a) in said transportation network on the basis of at least said first identification datum (ID1) and said position datum (POS2,POS3,POS4),
**characterized in that**
the positioning means (15) further comprise orientation means configured for generating an orientation signal representing at least one orientation of the user equipment (1b) and/or a movement to which said user equipment (1b) is being subjected, wherein said user equipment (1,1b) further comprises input means (17) adapted to acquire said orientation signal, and wherein the processing and/or control means (11) are configured for
- acquiring, via the input means (17), the orientation signal generated by the orientation means,
- determining, on the basis of the orientation signal, a motion datum that defines whether said user equipment (1,1b) is in a means of transportation, and
- determining the position datum only if said motion datum indicates that the user equipment (1,1b) is in a means of transportation.

2. User equipment (1,1b) according to claim 1, wherein the positioning means (15) comprise a radio receiver, wherein the processing and/or control means (11) are preferably configured for
- receiving, via a radio receiver, an in-vehicle signal emitted by a transmitter apparatus (EB) positioned in the transportation vehicle (V), wherein said in-vehicle signal comprises trip data that define a service provided by said transportation vehicle (V), and
- determining the position datum on the basis of the trip data comprised in said in-vehicle signal.

3. User equipment (1,1b) according to any one of claims 1 or 2, further comprising memory means (12,13) containing at least coverage data associating with at least one wireless data network a position or an area where it is possible to receive the signal of said wireless network, wherein the positioning means (15) comprise a wireless network access interface, and wherein the processing and/or control means (11) are configured for
- determining, via said wireless network access interface, a set of identifiers, each one of which identifies one wireless data network, and
- determining the position datum on the basis of said set of identifiers and said coverage data.

4. User equipment (1,1b) according to any one of claims 1 to 3, wherein the positioning means (15) further comprise a receiver of satellite positioning signals, and wherein the processing and/or control means (11) are configured for
- activating the receiver of satellite positioning signals,
- determining, via said receiver of satellite positioning signals, at least one signal-to-noise ratio of at least one positioning signal received,
- determining, via said receiver of satellite positioning signals, the position datum if said at least one signal-to-noise ratio is higher than a threshold.

5. Tracking system (S) comprising at least
- a first user equipment (1,1b) according to any one of claims 1 to 4, and
- an electronic computer (DB) configured for executing a set of instructions implementing a tracking algorithm adapted to determine, on the basis of one or more position data (POS2,POS3,POS4) determined and transmitted by at least said first user equipment (1,1b) and said first identification datum (ID1), a route datum that defines a route that the second user equipment (1,1a) has followed within the transportation network.

6. Tracking system (S) according to claim 5, further comprising a transmitter apparatus (EB) positioned in the transportation vehicle (V) and configured for transmitting an in-vehicle signal containing at least trip data that define a service provided by said transportation vehicle (V), wherein the processing and/or control means (11) of the first user equipment (1,1b) are also configured for establishing a connection with the transmitter apparatus (EB) prior to receiving the in-vehicle signal emitted by said transmitter apparatus (EB), and for keeping said connection alive after having determined the position datum, and wherein the transmitter apparatus (EB) is configured for
- determining a number of passengers aboard the vehicle,
- determining a number of user equipments (1a,1b) connected to said transmitter apparatus (EB), and
- determining, on the basis of the number of passengers and the number of user equipments (1a,1b) connected to said transmitter apparatus (EB), whether an invitation signal should be generated in order to invite the passengers to correctly configure their own user equipment (1a,1b), so as to reduce the presence of untracked passengers.

7. Tracking system (S) according to claim 6, comprising a service apparatus (T) configured for
- establishing a connection with the transmission apparatus (EB),
- generating update data on the basis of service data specifying a status of a service that the vehicle (V) will have to provide or is providing, and
- transmitting, via said connection, an update message to the transmission apparatus (EB), wherein said update message contains at least said update data, and wherein
said transmission apparatus (EB) is configured for
- receiving said update message, and
- generating the trip data on the basis of said update message.

8. Tracking system (S) according to any one of claims 5 to 7, wherein the set of instructions executed by the electronic computer (DB) implements a neural network trained by inputting to said neural network at least one sequence of position data and by forcing it to output at least one second route datum compatible with the input sequence of position data.

9. Method, by a first user equipment, for tracking a second user equipment (1,1a) in a transportation network, comprising
- a reception phase (P1), wherein a first identification signal (S1) emitted by said second user equipment when it is aboard a means of transportation (V) is received by reception means (14), wherein said first identification signal comprises a first identification datum (ID1) that identifies said second user equipment (1,1a),
- a positioning phase (P2), wherein a position datum (POS2,POS3,POS4) is determined by positioning means (15), and said position datum defines the position in which said first identification signal (ID1) has been received,
- a transmission phase (P3), wherein a second identification signal (S2,S3,S4) is transmitted, by communication means (16), to an electronic computer (DB), wherein said second identification signal (S2,S3,S4) comprises at least said first identification datum (ID1) and said position datum (POS2,POS3,POS4), so that said electronic computer (DB) can track the route being followed by said second user equipment (1,1a) in said transportation network on the basis of at least said first identification datum (ID1) and said position datum (POS2,POS3,POS4),
**characterized in that**
during the positioning phase (P2), the following steps are carried out:
- acquiring, via input means (17), an orientation signal generated by orientation means, wherein said orientation signal represents at least one orientation of the first user equipment (1,1b) and/or a movement to which said first user equipment (1,1b) is being subjected,
- determining, on the basis of the orientation signal, a motion datum that defines whether said first user equipment (1,1b) is in a means of transportation, and
- determining the position datum only if said motion datum indicates that the first user equipment (1,1b) is in a means of transportation.

10. Method according to claim 9, wherein, during the positioning phase (P2), the following steps are carried out:
- receiving, via a radio receiver comprised in the positioning means (15), an in-vehicle signal emitted by a transmitter apparatus (EB) positioned in the transportation vehicle (V), wherein said in-vehicle signal comprises trip data that define a service provided by said transportation vehicle (V), and
- determining the position datum on the basis of the trip data comprised in said in-vehicle signal.

11. Method according to claims 9 or 10, wherein, during the positioning phase (P2), the following steps are carried out:
- determining, via a wireless network access interface, a set of identifiers, each one of which identifies one wireless data network, and
- determining the position datum on the basis of said set of identifiers and coverage data, wherein said coverage data associate with at least one wireless data network a position or an area in which it is possible to receive the signal of said wireless data network.

12. Method according to any one of claims 9 to 11, wherein, during the positioning phase (P2), the following steps are carried out:
- activating a receiver of satellite positioning signals comprised in the positioning means (15),
- determining, via said receiver of satellite positioning signals, at least one signal-to-noise ratio of at least one positioning signal received,
- determining, via said receiver of satellite positioning signals, the position datum if said at least one signal-to-noise ratio is higher than a threshold.

13. Computer program product loadable into the memory of an electronic computer and comprising software code portions for the execution of the steps of the method according to any one of claims 9 to 12.

## Patentansprüche

1. Benutzervorrichtung (1, 1b) zum Verfolgen einer zweiten Benutzervorrichtung (1, 1a) in einem Transportnetzwerk, umfassend
- Empfangsmittel (14) zum Empfangen von Signalen, die von der zweiten Benutzervorrichtung (1, 1a) ausgesendet werden,
- Positionierungsmittel (15) zum Bestimmen der Position der Benutzervorrichtung (1, 1b),
- Kommunikationsmittel (16) zum Übertragen von Signalen an einen elektronischen Computer (DB), und
- Verarbeitungsmittel (11), die ausgestaltet sind zum:
• Empfangen eines ersten Identifikationssignals (S1) über die Empfangsmittel (14), das von der zweiten Benutzervorrichtung (1, 1a) ausgesendet wird, wenn sie sich an Bord eines Transportmittels (V) befindet, wobei das erste Identifikationssignal ein erstes Identifikationsdatum (ID1) umfasst, welches die zweite Benutzervorrichtung (1, 1a) identifiziert,
• Bestimmen eines Positionsdatums (POS2, POS3, POS4) über die Positionierungsmittel (15), das die Position definiert, in welcher das erste Identifikationssignal (S1) empfangen wurde, und
• Übertragen eines zweiten Identifikationssignals (S2, S3, S4) über die Kommunikationsmittel (16) an den elektronischen Computer (DB), wobei das zweite Identifikationssignal (S2, S3, S4) zumindest das erste Identifikationsdatum (ID1) und das Positionsdatum (POS2, POS3, POS4) umfasst, so dass der elektronische Computer (DB) die Route, welcher die zweite Benutzervorrichtung (1, 1a) in dem Transportnetz folgt, auf der Grundlage zumindest des ersten Identifikationsdatums (ID1) und des Positionsdatums (POS2, POS3, POS4) verfolgen kann,
**dadurch gekennzeichnet, dass**
die Positionierungsmittel (15) ferner Orientierungsmittel umfassen, die dazu ausgestaltet sind, ein Orientierungssignal zu erzeugen, das zumindest eine Orientierung der Benutzervorrichtung (1b) und/oder eine Bewegung, welcher die Benutzervorrichtung (1b) unterliegt, darstellt,
wobei die Benutzervorrichtung (1, 1b) ferner Eingabemittel (17) umfasst, die dazu geeignet sind, das Orientierungssignal zu erfassen, und wobei die Verarbeitungs- und/oder Steuermittel (11) ausgestaltet sind zum
- Erfassen des Orientierungssignals, das von den Orientierungsmitteln erzeugt wird, über die Eingabemittel (17),
- Bestimmen eines Bewegungsdatums, das definiert, ob sich die Benutzervorrichtung (1, 1b) in einem Transportmittel befindet, auf der Grundlage des Orientierungssignals, und
- Bestimmen des Positionsdatums nur dann, wenn das Bewegungsdatum anzeigt, dass sich die Benutzervorrichtung (1, 1b) in einem Transportmittel befindet.

2. Benutzervorrichtung (1, 1b) nach Anspruch 1, wobei die Positionierungsmittel (15) einen Funkempfänger umfassen, wobei die Verarbeitungs- und/oder Steuermittel (11) vorzugsweise ausgestaltet sind zum
- Empfangen eines fahrzeuginternen Signals, das von einer Sendevorrichtung (EB), die in dem Transportfahrzeug (V) angeordnet ist, ausgesendet wird, über einen Funkempfänger, wobei das fahrzeuginterne Signal Reisedaten umfasst, die einen von dem Transportfahrzeug (V) bereitgestellten Dienst definieren, und
- Bestimmen des Positionsdatums auf der Grundlage der in dem fahrzeuginternen Signal enthaltenen Reisedaten.

3. Benutzervorrichtung (1, 1b) nach einem der Ansprüche 1 oder 2, ferner umfassend Speichermittel (12, 13), die zumindest Abdeckungsdaten enthalten, die zumindest einem drahtlosen Datennetz eine Position oder einen Bereich zuordnen, in dem es möglich ist, das Signal des drahtlosen Netzes zu empfangen, wobei die Positionierungsmittel (15) eine Zugangsschnittstelle zu dem drahtlosen Netz umfassen, und wobei die Verarbeitungs- und/oder Steuermittel (11) ausgestaltet sind zum
- Bestimmen eines Satzes von Identifikatoren über die Zugangsschnittstelle zu dem drahtlosen Netz, von denen jeder ein drahtloses Datennetz identifiziert, und
- Bestimmen des Positionsdatums auf der Grundlage des Satzes von Identifikatoren und der Abdeckungsdaten.

4. Benutzervorrichtung (1, 1b) nach einem der Ansprüche 1 bis 3, wobei die Positionierungsmittel (15) ferner einen Empfänger für Satellitenpositionierungssignale umfassen, und wobei die Verarbeitungs- und/oder Steuermittel (11) ausgestaltet sind zum
- Aktivieren des Empfängers für Satellitenpositionierungssignale,
- Bestimmen mindestens eines Signal-Rausch-Verhältnisses von zumindest einem empfangenen Positionssignal über den Empfänger für Satellitenpositionierungssignale,
- Bestimmen des Positionsdatums über den Empfänger von Satellitenortungssignalen, wenn das zumindest eine Signal-Rausch-Verhältnis größer als ein Schwellenwert ist.

5. Verfolgungssystem (S) umfassend zumindest
- eine erste Benutzervorrichtung (1, 1b) nach einem der Ansprüche 1 bis 4, und
- einen elektronischen Computer (DB), der dazu ausgestaltet ist, einen Satz von Anweisungen auszuführen, die einen Verfolgungsalgorithmus implementieren, der dazu geeignet ist, auf der Grundlage eines oder mehrerer Positionsdaten (POS2, POS3, POS4), die von zumindest der ersten Benutzervorrichtung (1, 1b) bestimmt und übertragen werden, und des ersten Identifikationsdatums (ID1) ein Routendatum zu bestimmen, das eine Route definiert, welcher die zweite Benutzervorrichtung (1, 1a) innerhalb des Transportnetzes gefolgt ist.

6. Verfolgungssystem (S) nach Anspruch 5, das ferner eine Übertragungseinrichtung (EB) umfasst, die in dem Transportfahrzeug (V) angeordnet und dazu ausgestaltet ist, ein fahrzeuginternes Signal zu senden, das zumindest Reisedaten enthält, die einen von dem Transportfahrzeug (V) bereitgestellten Dienst definieren, wobei die Verarbeitungs- und/oder Steuermittel (11) der ersten Benutzervorrichtung (1, 1b) auch dazu ausgestaltet sind, eine Verbindung mit der Übertragungseinrichtung (EB) herzustellen, bevor das von der Übertragungseinrichtung (EB) ausgesendete fahrzeuginterne Signal empfangen wird, und die Verbindung aufrechtzuerhalten, nachdem die Positionsdaten bestimmt wurden, und wobei die Sendervorrichtung (EB) ausgestaltet ist zum
- Bestimmen einer Anzahl von Fahrgästen an Bord des Fahrzeugs,
- Bestimmen einer Anzahl von Benutzervorrichtungen (1a, 1b), die mit der Übertragungseinrichtung (EB) verbunden sind, und
- Bestimmen, auf der Grundlage der Anzahl der Fahrgäste und der Anzahl der mit der Übertragungseinrichtung (EB) verbundenen Benutzervorrichtungen (1a, 1b), ob ein Aufforderungssignal erzeugt werden soll, um die Fahrgäste dazu aufzufordern, ihre eigenen Benutzervorrichtungen (1a, 1b) korrekt zu konfigurieren, um so die Anwesenheit von nicht verfolgten Fahrgästen zu reduzieren.

7. Verfolgungssystem (S) nach Anspruch 6, umfassend eine Serviceeinrichtung (T), die ausgestaltet ist zum
- Herstellen einer Verbindung mit der Übertragungseinrichtung (EB),
- Erzeugen von Aktualisierungsdaten auf der Grundlage von Servicedaten, die einen Status eines Dienstes angeben, den das Fahrzeug (V) bereitzustellen hat oder gerade bereitstellt, und
- Übertragen einer Aktualisierungsnachricht über die Verbindung an die Übertragungseinrichtung (EB), wobei die Aktualisierungsnachricht zumindest die Aktualisierungsdaten enthält, und wobei die Übertragungseinrichtung (EB) ausgestaltet ist zum
- Empfangen der Aktualisierungsnachricht, und
- Erzeugen der Reisedaten auf der Grundlage der Aktualisierungsnachricht.

8. Verfolgungssystem (S) nach einem der Ansprüche 5 bis 7, wobei der von dem elektronischen Rechner (DB) ausgeführte Satz von Anweisungen ein neuronales Netz implementiert, das trainiert wird, indem in das neuronale Netz mindestens eine Folge von Positionsdaten eingegeben wird und es gezwungen wird, mindestens ein zweites Routendatum auszugeben, das mit der eingegebenen Folge von Positionsdaten kompatibel ist.

9. Verfahren zur Verfolgung einer zweiten Benutzervorrichtung (1, 1a) in einem Transportnetz durch eine erste Benutzervorrichtung, umfassend
- eine Empfangsphase (P1), in der ein erstes Identifikationssignal (S1), das von der zweiten Benutzervorrichtung ausgesendet wird, wenn es sich an Bord eines Transportmittels (V) befindet, von Empfangsmitteln (14) empfangen wird, wobei das erste Identifikationssignal ein erstes Identifikationsdatum (1D1) umfasst, welches die zweite Benutzervorrichtung (1, 1a) identifiziert,
- eine Positionierungsphase (P2), in der ein Positionsdatum (POS2, POS3, POS4) durch Positionierungsmittel (15) bestimmt wird, und das Positionsdatum die Position definiert, in welcher das erste Identifikationssignal (ID1) empfangen wurde,
- eine Übertragungsphase (P3), in der ein zweites Identifikationssignal (S2, S3, S4) durch Kommunikationsmittel (16) an einen elektronischen Computer (DB) übertragen wird, wobei das zweite Identifikationssignal (S2, S3, S4) zumindest das erste Identifikationsdatum (ID1) und das Positionsdatum (POS2, POS3, POS4) umfasst, so dass der elektronische Computer (DB) die Route, welcher die zweite Benutzervorrichtung (1, 1a) in dem Transportnetz folgt, auf der Grundlage zumindest des ersten Identifikationsdatums (ID1) und des Positionsdatums (POS2, POS3, POS4) verfolgen kann,
**dadurch gekennzeichnet, dass**
während der Positionierungsphase (P2) die folgenden Schritte ausgeführt werden:
- Erfassen eines Orientierungssignals, das von Orientierungsmitteln erzeugt wird, über Eingabemittel (17), wobei das Orientierungssignal zumindest eine Orientierung der ersten Benutzervorrichtung (1, 1b) und/oder eine Bewegung, welcher die erste Benutzervorrichtung (1, 1b) unterliegt, darstellt,
- Bestimmen eines Bewegungsdatums, das definiert, ob sich die erste Benutzervorrichtung (1, 1b) in einem Transportmittel befindet, auf der Grundlage des Orientierungssignals, und
- Bestimmen des Positionsdatums nur dann, wenn das Bewegungsdatum anzeigt, dass sich die erste Benutzervorrichtung (1, 1b) in einem Transportmittel befindet.

10. Verfahren nach Anspruch 9, wobei während der Positionierungsphase (P2) die folgenden Schritte ausgeführt werden:
- Empfangen eines fahrzeuginternen Signals, das von einer Sendevorrichtung (EB), die in dem Transportfahrzeug (V) angeordnet ist, ausgesendet wird, über einen Funkempfänger, der in den Positionierungsmitteln (15) enthalten ist, wobei das fahrzeuginterne Signal Reisedaten umfasst, die einen von dem Transportfahrzeug (V) bereitgestellten Dienst definieren, und
- Bestimmen des Positionsdatums auf der Grundlage der in dem fahrzeuginternen Signal enthaltenen Reisedaten.

11. Verfahren nach den Ansprüche 9 oder 10, wobei während der Positionierungsphase (P2) die folgenden Schritte ausgeführt werden:
- Bestimmen eines Satzes von Identifikatoren über eine Zugangsschnittstelle zu dem drahtlosen Netz, von denen jeder ein drahtloses Datennetz identifiziert, und
- Bestimmen des Positionsdatums auf der Grundlage des Satzes von Identifikatoren und Abdeckungsdaten, wobei die Abdeckungsdaten zumindest einem drahtlosen Datennetz eine Position oder einen Bereich zuordnen, in dem es möglich ist, das Signal des drahtlosen Datennetzes zu empfangen,

12. Verfahren nach einem der Ansprüche 9 bis 11, wobei während der Positionierungsphase (P2) die folgenden Schritte ausgeführt werden:
- Aktivieren eines Empfängers für Satellitenpositionierungsssignale, der in den Positionierungsmitteln (15) enthalten ist,
- Bestimmen mindestens eines Signal-Rausch-Verhältnisses von zumindest einem empfangenen Positionssignal über den Empfänger für Satellitenpositionierungssignale,
- Bestimmen des Positionsdatums über den Empfänger von Satellitenortungssignalen, wenn das zumindest eine Signal-Rausch-Verhältnis größer als ein Schwellenwert ist.

13. Computerprogrammprodukt, das in den Speicher eines elektronischen Computers geladen werden kann und Software-Codeteile für die Ausführung der Schritte des Verfahrens nach einem der Ansprüche 9 bis 12 enthält.

## Revendications

1. Équipement utilisateur (1, 1b)pour suivre un deuxième équipement utilisateur (1, 1a) dans un réseau de transport, comprenant
- des moyens de réception (14) pour recevoir des signaux émis par ledit deuxième équipement utilisateur (1,1a),
- des moyens de positionnement (15) pour déterminer la position dudit équipement utilisateur (1, 1b),
- des moyens de communication (16) pour transmettre des signaux à un ordinateur électronique (DB), et
- des moyens de traitement (11) configurés pour
• recevoir, via le moyen de réception (14), un premier signal d'identification (S1) émis par ledit deuxième équipement utilisateur (1, 1a) lorsqu'il se trouve à bord d'un moyen de transport (V), ledit premier signal d'identification comprenant une première donnée d'identification (ID1) qui identifie ledit deuxième équipement utilisateur (1, 1a),
• déterminer, via le moyen de positionnement (15), une donnée de position (POS2, POS3, POS4) qui définit la position dans laquelle ledit premier signal d'identification (S1) a été reçu, et
• transmettre, via le moyen de communication (16), un deuxième signal d'identification (S2, S3, S4) audit ordinateur électronique (DB), dans lequel ledit deuxième signal d'identification (S2, S3, S4) comprend au moins ladite première donnée d'identification (ID1) et ladite donnée de position (POS2, POS3, POS4), de sorte que ledit ordinateur électronique (DB) peut suivre l'itinéraire emprunté par ledit deuxième équipement utilisateur (1, 1a) dans ledit réseau de transport sur la base d'au moins ladite première donnée d'identification (ID1) et ladite donnée de position (POS2, POS3, POS4),
**caractérisé en ce que**
les moyens de positionnement (15) comprennent en outre des moyens d'orientation configurés pour générer un signal d'orientation représentant au moins une orientation de l'équipement utilisateur (1b) et/ou un mouvement auquel ledit équipement utilisateur (1b) est soumis, dans lequel ledit équipement utilisateur (1, 1b) comprend en outre des moyens d'entrée adapté pour acquérir ledit signal d'orientation, et dans lequel les moyens de traitement et/ou de commande (11) sont configurés pour
- acquérir, via le moyen d'entrée (17), le signal d'orientation généré par le moyen d'orientation,
- déterminer, sur la base du signal d'orientation, une donnée de mouvement qui définit si ledit équipement utilisateur (1, 1b) se trouve dans un moyen de transport, et
- déterminer la donnée de position uniquement si ladite donnée de mouvement indique que l'équipement utilisateur (1, 1b) se trouve dans un moyen de transport.

2. Équipement utilisateur (1, 1b) selon la revendication 1, dans lequel les moyens de positionnement (15) comprennent un récepteur radio, dans lequel les moyens de traitement et/ou de commande (11) sont de préférence configurés pour
- recevoir, via un récepteur radio, un signal embarqué émis par un appareil émetteur (EB) positionné dans un véhicule de transport (V), dans lequel ledit signal embarqué comprend des données de trajet qui définissent un service fourni par ledit véhicule de transport (V), et
- déterminer la donnée de position sur la base des données de trajet contenues dans ledit signal embarqué.

3. Équipement utilisateur (1, 1b) selon l'une quelconque des revendications 1 ou 2, comprenant en outre des moyens de mémoire (12, 13) contenant au moins des données de couverture associant à au moins un réseau de données sans fil une position ou une zone où il est possible de recevoir le signal dudit réseau sans fil, dans lequel les moyens de positionnement (15) comprennent une interface d'accès au réseau sans fil, et dans lequel les moyens de traitement et/ou de commande (11) sont configurés pour
- déterminer, via ladite interface d'accès au réseau sans fil, un ensemble d'identificateurs, chacun d'entre eux identifiant un réseau de données sans fil, et
- déterminer la donnée de position sur la base dudit ensemble d'identificateurs et desdites données de couverture.

4. Équipement utilisateur (1, 1b) selon l'une quelconque des revendications 1 à 3, dans lequel les moyens de positionnement (15) comprennent en outre un récepteur de signaux de positionnement par satellite, et dans lequel les moyens de traitement et/ou de commande (11) sont configurés pour
- activer le récepteur de signaux de positionnement par satellite,
- déterminer, via ledit récepteur de signaux de positionnement par satellite, au moins un rapport signal/bruit d'au moins un signal de positionnement reçu,
- déterminer, via ledit récepteur de signaux de positionnement par satellite, la donnée de position si ledit au moins un rapport signal/bruit est supérieur à un seuil.

5. Système de suivi (S) comprenant au moins
- un premier équipement utilisateur (1, 1b) selon l'une quelconque des revendications 1 à 4, et
- un ordinateur électronique (DB) configuré pour exécuter un ensemble d'instructions mettant en œuvre un algorithme de suivi adapté pour déterminer, sur la base d'une ou plusieurs données de position (POS2, POS3, POS4) déterminées et transmises par au moins ledit premier équipement utilisateur (1, 1b) et ladite première donnée d'identification (ID1), une donnée d'itinéraire qui définit un itinéraire que le deuxième équipement utilisateur (1, la) a suivi au sein du réseau de transport.

6. Système de suivi (S) selon la revendication 5, comprenant en outre un appareil émetteur (EB) positionné dans le véhicule de transport (V) et configuré pour transmettre un signal embarqué contenant au moins les données de trajet minimales qui définissent un service fourni par ledit véhicule de transport (V), dans lequel les moyens de traitement et/ou de commande (11) du premier équipement utilisateur (1, 1b) sont également configurés pour établir une connexion avec l'appareil émetteur (EB) avant de recevoir le signal embarqué émis par ledit appareil émetteur (EB), et pour maintenir ladite connexion active après avoir déterminé la donnée de position, et dans lequel l'appareil émetteur (EB) est configuré pour
- déterminer un nombre de passagers à bord du véhicule,
- déterminer un nombre d'équipements utilisateurs (1a, 1b) connectés audit appareil émetteur (EB), et
- déterminer, sur la base du nombre de passagers et du nombre d'équipements utilisateurs (1a, 1b) connectés audit appareil émetteur (EB), si un signal d'invitation doit être généré afin d'inviter les passagers à configurer correctement leur propre équipement utilisateur (1a, 1b), de manière à réduire la présence de passagers non suivis.

7. Système de suivi (S) selon la revendication 6, comprenant un appareil de service (T) configuré pour
- établir une connexion avec l'appareil de transmission (EB),
- générer des données de mise à jour sur la base de données de service spécifiant un état d'un service que le véhicule (V) devra fournir ou est en train de fournir, et
- transmettre, via ladite connexion, un message de mise à jour à l'appareil de transmission (EB), dans lequel ledit message de mise à jour contient au moins lesdites données de mise à jour, et dans lequel ledit appareil de transmission (EB) est configuré pour
∘ recevoir ledit message de mise à jour, et
∘ générer les données de trajet sur la base dudit message de mise à jour.

8. Système de suivi (S) selon l'une quelconque des revendications 5 à 7, dans lequel l'ensemble d'instructions exécutées par l'ordinateur électronique (DB) met en œuvre un réseau neuronal entraîné en entrant dans ledit réseau neuronal au moins une séquence de données de position et en le forçant à produire au moins une deuxième donnée d'itinéraire compatible avec la séquence d'entrée de données de position.

9. Procédé, par un premier équipement utilisateur, pour suivre un second équipement utilisateur (1, 1a) dans un réseau de transport, comprenant
- une phase de réception (P1), dans laquelle un premier signal d'identification (S1) émis par ledit second équipement utilisateur lorsqu'il est à bord d'un moyen de transport (V) est reçu par un moyen de réception (14), dans lequel ledit premier signal d'identification comprend une première donnée d'identification (ID1) qui identifie ledit deuxième équipement utilisateur (1, 1a),
- une phase de positionnement (P2), dans laquelle une donnée de position (POS2, POS3, POS4) est déterminée par des moyens de positionnement (15), et ladite donnée de position définit la position dans laquelle ledit premier signal d'identification (ID1) a été reçu,
- une phase de transmission (P3), dans laquelle un deuxième signal d'identification (S2, S3, S4) est transmis, par des moyens de communication (16), à un ordinateur électronique (DB), dans laquelle ledit deuxième signal d'identification (S2, S3, S4) comprend au moins ladite première donnée d'identification (ID1) et ladite donnée de position (POS2, POS3, POS4), de sorte que ledit ordinateur électronique (DB) peut suivre l'itinéraire emprunté par ledit deuxième équipement utilisateur (1, 1a) dans ledit réseau de transport sur la base d'au moins ladite première donnée d'identification (ID1) et ladite donnée de position (POS2, POS3, POS4),
**caractérisé en ce que**
au cours de la phase de positionnement (P2), les étapes suivantes sont effectuées :
- acquisition, via un moyen d'entrée (17), d'un signal d'orientation généré par des moyens d'orientation, dans lequel ledit signal d'orientation représente au moins une orientation du premier équipement utilisateur (1,1b) et/ou un mouvement auquel est soumis ledit premier équipement utilisateur (1, 1b),
- déterminer, sur la base du signal d'orientation, une donnée de mouvement qui définit si ledit premier équipement utilisateur (1, 1b) se trouve dans un moyen de transport, et
- déterminer la donnée de position uniquement si ladite donnée de mouvement indique que le premier équipement utilisateur (1, 1b) se trouve dans in moyen de transport.

10. Procédé selon la revendication 9, dans lequel, pendant la phase de positionnement (P2), les étapes suivantes sont effectuées :
- réception, via un récepteur radio compris dans les moyens de positionnement (15), d'un signal embarqué émis par un dispositif émetteur (EB) positionné dans le véhicule de transport (V), dans lequel ledit signal embarqué comprend des données de trajet qui définissent un service fourni par ledit véhicule de transport (V), et
- déterminer la donnée de position sur la base des données de trajet comprises dans ledit signal embarqué.

11. Procédé selon les revendications 9 ou 10, dans lequel, pendant la phase de positionnement (P2), les étapes suivantes sont effectuées :
- déterminer, via une interface d'accès au réseau sans fil, un ensemble d'identificateurs, chacun identifiant un réseau de données sans fil, et
- déterminer la donnée de position sur la base dudit ensemble d'identificateurs et de données de couverture, dans lequel lesdites données de couverture associent à au moins un réseau de données sans fil une position ou une zone dans laquelle il est possible de recevoir le signal dudit réseau de données sans fil.

12. Procédé selon l'une quelconque des revendications 9 à 11, dans lequel, pendant la phase de positionnement (P2), les étapes suivantes sont effectuées :
- activer un récepteur de signaux de positionnement par satellite compris dans le moyen de positionnement (15),
- détermination, via ledit récepteur de signaux de positionnement par satellite, d'au moins un rapport signal/bruit d'au moins un signal de positionnement reçu,
- déterminer, via ledit récepteur de signaux de positionnement par satellite, la donnée de position si ledit au moins un rapport signal/bruit est supérieur à un seuil.

13. Produit de programme informatique pouvant être chargé dans la mémoire d'un ordinateur électronique et comprenant des parties de code logiciel pour l'exécution des étapes du procédé selon l'une quelconque des revendications 9 à 12.
